(19) Europäisches Patentamt
European Patent Office
Office européen des brevets

(11) **EP 4 451 004 A1**

(12) **EUROPEAN PATENT APPLICATION**
published in accordance with Art. 153(4) EPC

(43) Date of publication:
**23.10.2024 Bulletin 2024/43**

(21) Application number: **22917843.9**

(22) Date of filing: **07.01.2022**

(51) International Patent Classification (IPC):
*G01S 7/481* (2006.01)    *H04N 3/08* (2006.01)

(52) Cooperative Patent Classification (CPC):
**G01S 7/481; H04N 3/08**

(86) International application number:
**PCT/CN2022/070794**

(87) International publication number:
**WO 2023/130371 (13.07.2023 Gazette 2023/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **SUN, Yuanmeng**
  **Shenzhen, Guangdong 518129 (CN)**
• **SHI, Xianling**
  **Shenzhen, Guangdong 518129 (CN)**
• **CHEN, Guo**
  **Shenzhen, Guangdong 518129 (CN)**
• **HUANG, Zhizhen**
  **Shenzhen, Guangdong 518129 (CN)**

(74) Representative: **Maiwald GmbH**
**Engineering**
**Elisenhof**
**Elisenstrasse 3**
**80335 München (DE)**

(54) **DRIVING APPARATUS FOR REFLECTING MIRROR, DRIVING METHOD, RADAR, AND TERMINAL**

(57)    Embodiments of this application provide a driving apparatus and a driving method of a reflecting mirror, a radar, and a terminal, and may be applied to the field of lidars. The driving apparatus includes a motor and a first power assisting apparatus. The motor is configured to drive the reflecting mirror to move. A first end of the first power assisting apparatus is fastened to a first end of the reflecting mirror, a second end of the first power assisting apparatus is fastened to a first position, the first position is fixed relative to the motor, and the first power assisting apparatus acts on the first end of the reflecting mirror for acceleration motion and/or deceleration motion. The solutions of this application can reduce a requirement on a driving component like a motor in a process of driving the reflecting mirror to move.

FIG. 3

## Description

## TECHNICAL FIELD

Embodiments of this application relate to the field of perception technologies, and more specifically, to a driving apparatus and a driving method of a reflecting mirror, a radar, and a terminal.

## BACKGROUND

A lidar (light detection and ranging, Lidar) reflecting mirror implements scanning coverage of a laser beam in space through reciprocating motion within a specific field of view (field of view, FOV). Generally, the reciprocating motion of the reflecting mirror needs to be driven by a driving component like a motor. However, acceleration motion and deceleration motion involved in the reciprocating motion of the reflecting mirror needs to be completed within a short time range to ensure lighting efficiency of the reflecting mirror. This undoubtedly imposes a higher requirement on the driving component like the motor.

Therefore, how to reduce the requirement on the driving component like the motor is a technical problem that needs to be urgently resolved.

## SUMMARY

Embodiments of this application provide a driving apparatus and a driving method of a reflecting mirror, a radar, and a terminal, to reduce a requirement on a driving component like a motor.

According to a first aspect, a driving apparatus of a reflecting mirror is provided, including a motor and a first power assisting apparatus. The motor is configured to drive the reflecting mirror to move. A first end of the first power assisting apparatus is fastened to a first end of the reflecting mirror, a second end of the first power assisting apparatus is fastened to a first position, the first position is fixed relative to the motor, and the first power assisting apparatus acts on the first end of the reflecting mirror for acceleration motion and/or deceleration motion.

It should be understood that the solutions of this application may be applied to a lidar, or may be applied to another scenario in which the motor drives a load for acceleration oscillation or deceleration oscillation. This is not limited.

Optionally, the motor in the driving apparatus may be alternatively replaced with another component having a drive function. This is not limited in this application. However, for ease of description, in this application, the motor is used as an example.

In this application, driving the reflecting mirror to move includes driving the reflecting mirror to perform reciprocating motion. Optionally, the reflecting mirror performing the reciprocating motion may also be referred to as an oscillating mirror. This is not limited in this application. It should be understood that, in a process of performing the reciprocating motion, uniform motion, acceleration motion, and deceleration motion are involved.

It should be understood that the first end of the reflecting mirror is mainly one of two ends that are of the reflecting mirror and that perform the reciprocating motion.

It should be understood that, for the reflecting mirror, one surface used to reflect a light beam is referred to as a front surface or a reflective surface, and the other surface is referred to as a back surface. Optionally, the first end of the first power assisting apparatus may be fastened to the back surface of the first end of the reflecting mirror.

Optionally, the first position may be located on a housing of the motor, or may be another position fixed relative to the motor, provided that the first power assisting apparatus fastened to this position can assist the first end of the reflecting mirror in the acceleration motion and/or the deceleration motion.

It should be understood that, in this application, that the first power assisting apparatus acts on the first end of the reflecting mirror for acceleration motion and/or deceleration motion mainly means that the first power assisting apparatus can assist the first end of the reflecting mirror in performing the acceleration motion and/or the deceleration motion.

In addition to the motor, the driving apparatus of the reflecting mirror provided in embodiments of this application further includes the first power assisting apparatus, and the first power assisting apparatus can act on the first end of the reflecting mirror for the acceleration motion and/or the deceleration motion, to avoid a case in which the acceleration motion and/or the deceleration motion of the first end of the reflecting mirror are/is driven by only the motor. In this way, a requirement on the motor can be reduced.

With reference to the first aspect, in some implementations of the first aspect, that the first power assisting apparatus acts on the first end of the reflecting mirror for the acceleration motion and/or the deceleration motion may include: When the first end of the reflecting mirror performs the deceleration motion, a direction of a force applied to the first end of the reflecting mirror by the first power assisting apparatus is opposite to a moving direction of the first end of the reflecting mirror; and/or when the first end of the reflecting mirror performs the acceleration motion, the direction of the force applied to the first end of the reflecting mirror by the first power assisting apparatus is the same as the moving direction of the first end of the reflecting mirror.

In embodiments of this application, when the first end of the reflecting mirror performs the deceleration motion, the direction of the force applied to the first end of the reflecting mirror by the first power assisting apparatus is opposite to the moving direction of the first end of the reflecting mirror, so that the first end of the reflecting mirror can be assisted in performing the deceleration motion. When the first end of the reflecting mirror performs the acceleration motion, the direction of the force applied to the first end of the reflecting mirror by the first power assisting apparatus is the same as the moving direction of the first end of the reflecting mirror, so that the first end of the reflecting mirror can be assisted in performing the acceleration motion. In this way, the requirement on the motor can be reduced.

With reference to the first aspect, in some implementations of the first aspect, the first power assisting apparatus includes a first spring.

It should be understood that, when the first power assisting apparatus includes the first spring, the first end of the reflecting mirror compresses or stretches the first spring during the reciprocating motion, to generate a pushing force or a pulling force on the first end of the reflecting mirror, so as to assist the first end of the reflecting mirror in the acceleration motion and/or the deceleration motion.

With reference to the first aspect, in some implementations of the first aspect, the first end of the first power assisting apparatus includes a first permanent magnet, and the second end of the first power assisting apparatus includes a second permanent magnet.

It should be understood that, in this application, an acting force generated between the first permanent magnet and the second permanent magnet is a repulsive force, and the repulsive force between the first permanent magnet and the second permanent magnet increases as a distance between the first permanent magnet and the second permanent magnet decreases, and decreases as the distance increases.

In this application, a distance between the first position and the first end of the reflecting mirror may be appropriately controlled to control a magnitude of the repulsive force, so that when the first end of the reflecting mirror performs the acceleration motion or the deceleration motion at a position close to the first position, time of the acceleration motion or the deceleration motion is shortened under action of the repulsive force, and when the first end of the reflecting mirror performs the acceleration motion or the deceleration motion at a position far away from the first position, the acceleration motion or the deceleration motion is not affected by the first permanent magnet and the second permanent magnet.

With reference to the first aspect, in some implementations of the first aspect, the first end of the first power assisting apparatus includes a third permanent magnet, and the second end of the first power assisting apparatus includes a first electromagnet.

It should be understood that the electromagnet may control a direction of a magnetic field by changing a direction of an electrified current. Therefore, the third permanent magnet and the first electromagnet can be controlled to generate an attractive force or a repulsive force. In this application, when the first end of the first power assisting apparatus includes the third permanent magnet, and the second end of the first power assisting apparatus includes the first electromagnet, the direction of the magnetic field of the electromagnet may be controlled, so that when the first end of the reflecting mirror performs the deceleration motion, the direction of the force applied to the first end of the reflecting mirror by the first power assisting apparatus is opposite to the moving direction of the first end of the reflecting mirror, and when the first end of the reflecting mirror performs the acceleration motion, the direction of the force applied to the first end of the reflecting mirror by the first power assisting apparatus is the same as the moving direction of the first end of the reflecting mirror.

Optionally, the permanent magnet in this application may be a magnet patch attached to the first end of the reflecting mirror or the first position, or may be a magnet block embedded in the first end of the reflecting mirror or the first position, or may be fastened to the first end of the reflecting mirror or the first position in another form. This is not limited in this application.

It should be understood that the first power assisting apparatus is merely an example. In practice, the first end and the second end of the first power assisting apparatus each may include an electromagnet or a permanent magnet. This is not limited in this application. However, it is considered that disposing an electromagnet at or embedding a magnet block in the first end of the reflecting mirror increases complexity of a manufacturing process of the first end of the reflecting mirror. Therefore, in this application, to simplify the manufacturing process of the first end of the reflecting mirror, when the first end of the first power assisting apparatus includes a permanent magnet, a magnet patch is selected, and is fastened to the first end of the reflecting mirror through pasting. When the second end of the first power assisting apparatus includes a permanent magnet, a magnet patch or a magnet block may be selected. This is not limited.

With reference to the first aspect, in some implementations of the first aspect, the apparatus further includes a controller, and the controller is configured to control to conduct or interrupt a current passing through the first electromagnet.

In this embodiment of this application, the current passing through the first electromagnet may be controlled to be conducted or interrupted, to control the first power assisting apparatus to act on the first end of the reflecting mirror for the acceleration motion and/or the deceleration motion. In this way, the requirement on the motor can be reduced. This can further avoid interference caused by only the power assisting apparatus like the permanent magnet or a spring to uniform motion of the first end of the reflecting mirror, and improve drive control performance of the power assisting apparatus in a motion process of the reflecting mirror.

With reference to the first aspect, in some implementations of the first aspect, the controller is further configured to: control to conduct the current passing through the first electromagnet, so that a direction of a force that is generated by the third permanent magnet and the first electromagnet and that is applied to the first end of the reflecting mirror is the same as the moving direction of the first end of the reflecting mirror; and/or control to interrupt the current passing through the first electromagnet, so that the first end of the reflecting mirror keeps performing uniform motion under driving of the motor; and/or control to conduct the current passing through the first electromagnet, so that the direction of the force that is generated by the third permanent magnet and the first electromagnet and that is applied to the first end of the reflecting mirror is opposite to the moving direction of the first end of the reflecting mirror.

Specifically, when the first end of the reflecting mirror starts to perform the acceleration motion, the current passing through the first electromagnet may be controlled to be conducted, so that the direction of the force that is generated by the third permanent magnet and the first electromagnet and that is applied to the first end of the reflecting mirror is the same as the moving direction of the first end of the reflecting mirror. When the first end of the reflecting mirror starts to perform the uniform motion, the current passing through the first electromagnet is controlled to be interrupted, so that the first end of the reflecting mirror keeps performing the uniform motion under driving of the motor. When the first end of the reflecting mirror starts to perform the deceleration motion, the current passing through the first electromagnet is controlled to be conducted, so that the direction of the force that is generated by the third permanent magnet and the first electromagnet and that is applied to the first end of the reflecting mirror is opposite to the moving direction of the first end of the reflecting mirror.

With reference to the first aspect, in some implementations of the first aspect, the controller is further configured to periodically control to conduct or interrupt the current passing through the first electromagnet.

In embodiments of this application, the current passing through the first electromagnet may be periodically controlled to be conducted or interrupted, to control the first power assisting apparatus to periodically act on the first end of the reflecting mirror for the acceleration motion and/or the deceleration motion. In this way, the requirement on the motor can be reduced. This can further avoid interference caused by the power assisting apparatus like the permanent magnet or a spring to uniform motion of the first end of the reflecting mirror, and improve drive control performance of the power assisting apparatus in reciprocating motion process of the reflecting mirror.

With reference to the first aspect, in some implementations of the first aspect, the apparatus further includes a second power assisting apparatus. A first end of the second power assisting apparatus is fastened to a second end of the reflecting mirror, a second end of the second power assisting apparatus is fastened to a second position, the second position is fixed relative to the motor, and the second power assisting apparatus acts on the second end of the reflecting mirror for the acceleration motion and/or the deceleration motion.

It should be understood that the second end of the reflecting mirror is mainly the other one of the two ends that are of the reflecting mirror and that perform the reciprocating motion.

Optionally, the first end of the second power assisting apparatus may be fastened to a back surface of the second end of the reflecting mirror.

Optionally, the second position may be located on a housing of the motor, or may be another position fixed relative to the motor, provided that the second power assisting apparatus fastened to this position can assist the second end of the reflecting mirror in the acceleration motion and/or the deceleration motion.

It should be understood that, in this application, that the second power assisting apparatus acts on the second end of the reflecting mirror for the acceleration motion and/or the deceleration motion mainly means that the second power assisting apparatus can assist the second end of the reflecting mirror in performing the acceleration motion and/or the deceleration motion.

In addition to the motor and the first power assisting apparatus, the driving apparatus of the reflecting mirror provided in embodiments of this application may further include the second power assisting apparatus, and the second power assisting apparatus can act on the second end of the reflecting mirror for the acceleration motion and/or the deceleration motion, to avoid a case in which the acceleration motion and/or the deceleration motion of the second end of the reflecting mirror are/is driven by only the motor. In this way, the requirement on the motor can be reduced.

With reference to the first aspect, in some implementations of the first aspect, that the second power assisting apparatus acts on the second end of the reflecting mirror for the acceleration motion and/or the deceleration motion may include: When the second end of the reflecting mirror performs the deceleration motion, a direction of a force applied to the second end of the reflecting mirror by the second power assisting apparatus is opposite to a moving direction of the second end of the reflecting mirror; and/or when the second end of the reflecting mirror performs the acceleration motion, the direction of the force applied to the second end of the reflecting mirror by the second power assisting apparatus is the same as the moving direction of the second end of the reflecting mirror.

In embodiments of this application, when the second end of the reflecting mirror performs the deceleration motion, the direction of the force applied to the second end of the reflecting mirror by the second power assisting apparatus is opposite to the moving direction of the second end of the reflecting mirror, so that the second end of the reflecting mirror can be assisted in performing the deceleration motion. When the second end of the reflecting mirror performs the acceleration motion, the direction of the force applied to the second end of the reflecting mirror by the second power assisting apparatus is the same as the moving direction of the second end of the reflecting mirror, so that the second end of the reflecting mirror can be assisted in performing the acceleration motion. In this way, the requirement on the motor can be reduced.

With reference to the first aspect, in some implementations of the first aspect, the second power assisting apparatus includes a second spring.

It should be understood that, when the second power assisting apparatus includes the second spring, the second end of the reflecting mirror compresses or stretches the second spring during the reciprocating motion, to generate a pushing force or a pulling force on the second end of the reflecting mirror, so as to assist the second end of the reflecting mirror in the acceleration motion and/or the deceleration motion.

With reference to the first aspect, in some implementations of the first aspect, the first end of the second power assisting apparatus includes a fourth permanent magnet, and the second end of the second power assisting apparatus includes a fifth permanent magnet.

It should be understood that, in this application, an acting force generated between the fourth permanent magnet and the fifth permanent magnet is a repulsive force, and the repulsive force between the fourth permanent magnet and the fifth permanent magnet increases as a distance between the fourth permanent magnet and the fifth permanent magnet decreases, and decreases as the distance increases.

In this application, a distance between the second position and the second end of the reflecting mirror may be appropriately controlled to control a magnitude of the repulsive force, so that when the second end of the reflecting mirror performs the acceleration motion or the deceleration motion at a position close to the second position, time of the acceleration motion or the deceleration motion is shortened under action of the repulsive force, and when the second end of the reflecting mirror performs the acceleration motion or the deceleration motion at a position far away from the second position, the acceleration motion or the deceleration motion is not affected by the fourth permanent magnet and the fifth permanent magnet.

With reference to the first aspect, in some implementations of the first aspect, the first end of the second power assisting apparatus includes a sixth permanent magnet, and the second end of the second power assisting apparatus includes a second electromagnet.

It should be understood that the electromagnet may control a direction of a magnetic field by changing a direction of an electrified current. Therefore, the sixth permanent magnet and the second electromagnet can be controlled to generate an attractive force or a repulsive force. In this application, when the first end of the second power assisting apparatus includes the sixth permanent magnet, and the second end of the second power assisting apparatus includes the second electromagnet, the direction of the magnetic field of the electromagnet may be controlled, so that when the second end of the reflecting mirror performs the deceleration motion, the direction of the force applied to the second end of the reflecting mirror by the second power assisting apparatus is opposite to the moving direction of the second end of the reflecting mirror, and when the second end of the reflecting mirror performs the acceleration motion, the direction of the force applied to the second end of the reflecting mirror by the second power assisting apparatus is the same as the moving direction of the second end of the reflecting mirror.

Optionally, the permanent magnet in this application may be a magnet patch attached to the second end of the reflecting mirror or the second position, or may be a magnet block embedded in the second end of the reflecting mirror or the second position, or may be fastened to the second end of the reflecting mirror or the second position in another form. This is not limited in this application.

It should be understood that the second power assisting apparatus is merely an example. In practice, the first end and the second end of the second power assisting apparatus each may include an electromagnet or a permanent magnet. This is not limited in this application. However, it is considered that disposing an electromagnet at or embedding a magnet block in the second end of the reflecting mirror increases complexity of a manufacturing process of the second end of the reflecting mirror. Therefore, in this application, to simplify the manufacturing process of the second end of the reflecting mirror, when the first end of the second power assisting apparatus includes a permanent magnet, a magnet patch is selected, and is fastened to the second end of the reflecting mirror through pasting. When the second end of the second power assisting apparatus includes a permanent magnet, a magnet patch or a magnet block may be selected. This is not limited.

Optionally, the first power assisting apparatus and the second power assisting apparatus may be the same or different. For example, the first power assisting apparatus and the second power assisting apparatus each may include a spring. Alternatively, the first power assisting apparatus includes a spring, and the first end and the second end of the second power assisting apparatus each include a permanent magnet. Alternatively, the first end and the second end of the first power assisting apparatus respectively include a permanent magnet and an electromagnet, and the first end and the second end of the second power assisting apparatus each include a permanent magnet. This is not limited in this application.

With reference to the first aspect, in some implementations of the first aspect, the controller is further configured to control to conduct or interrupt the current passing through the second electromagnet.

In this embodiment of this application, the current passing through the second electromagnet may be controlled to be conducted or interrupted, to control the second power assisting apparatus to act on the second end of the reflecting mirror for the acceleration motion and/or the deceleration motion. In this way, the requirement on the motor can be reduced. This can further avoid interference caused by the power assisting apparatus like the permanent magnet or the spring to uniform motion of the second end of the reflecting mirror, and improve drive control performance of the power assisting apparatus in a motion process of the reflecting mirror.

With reference to the first aspect, in some implementations of the first aspect, the controller is further configured to: control to conduct the current passing through the second electromagnet, so that a direction of a force that is generated by the sixth permanent magnet and the second electromagnet and that is applied to the second end of the reflecting mirror is the same as the moving direction of the second end of the reflecting mirror; and/or control to interrupt the current passing through the second electromagnet, so that the second end of the reflecting mirror keeps performing uniform motion under driving of the motor; and/or control to conduct the current passing through the second electromagnet, so that the direction of the force that is generated by the sixth permanent magnet and the second electromagnet and that is applied to the second end of the reflecting mirror is opposite to the moving direction of the second end of the reflecting mirror.

Specifically, when the second end of the reflecting mirror starts to perform the acceleration motion, the current passing through the second electromagnet may be controlled to be conducted, so that the direction of the force that is generated by the sixth permanent magnet and the second electromagnet and that is applied to the second end of the reflecting mirror is the same as the moving direction of the second end of the reflecting mirror. When the second end of the reflecting mirror starts to perform the uniform motion, the current passing through the second electromagnet is controlled to be interrupted, so that the second end of the reflecting mirror keeps performing the uniform motion under driving of the motor. When the second end of the reflecting mirror starts to perform the deceleration motion, the current passing through the second electromagnet is controlled to be conducted, so that the direction of the force that is generated by the sixth permanent magnet and the second electromagnet and that is applied to the second end of the reflecting mirror is opposite to the moving direction of the second end of the reflecting mirror.

With reference to the first aspect, in some implementations of the first aspect, the controller is further configured to periodically control to conduct or interrupt the current passing through the second electromagnet.

In embodiments of this application, the current passing through the second electromagnet may be periodically controlled to be conducted or interrupted, to control the second power assisting apparatus to periodically act on the second end of the reflecting mirror for the acceleration motion and/or the deceleration motion. In this way, the requirement on the motor can be reduced. This can further avoid interference caused by the power assisting apparatus like the permanent magnet or the spring to uniform motion of the second end of the reflecting mirror, and improve drive control performance of the power assisting apparatus in the reciprocating motion process of the reflecting mirror.

According to a second aspect, a driving method of a reflecting mirror is provided. The method is applied to a driving apparatus including a motor and a first power assisting apparatus. The motor is configured to drive the reflecting mirror to move. A first end of the first power assisting apparatus includes a third permanent magnet, a second end of the first power assisting apparatus includes a first electromagnet, the third permanent magnet is fastened to a first end of the reflecting mirror, the first electromagnet is fastened to a first position, and the first position is fixed relative to the motor. The method includes: controlling to conduct or interrupt a current passing through the first electromagnet.

The driving method of the reflecting mirror provided in this application may be applied to the driving apparatus including the motor and the first power assisting apparatus. The motor is configured to drive the reflecting mirror to move. The first end of the first power assisting apparatus includes the third permanent magnet, the second end of the first power assisting apparatus includes the first electromagnet, the third permanent magnet is fastened to the first end of the reflecting mirror, the first electromagnet is fastened to the first position, and the first position is fixed relative to the motor. In this application, the current passing through the first electromagnet may be controlled to be conducted or interrupted, to control the first power assisting apparatus to act on the first end of the reflecting mirror for acceleration motion and/or deceleration motion. In this way, a requirement on the motor can be reduced. This can further avoid interference caused by the power assisting apparatus like the permanent magnet or a spring to uniform motion of the first end of the reflecting mirror, and improve drive control performance of the power assisting apparatus in a motion process of the reflecting mirror.

With reference to the second aspect, in some implementations of the second aspect, the controlling to conduct or interrupt a current passing through the first electromagnet includes: controlling to conduct the current passing through the first electromagnet, so that a direction of a force that is generated by the third permanent magnet and the first electromagnet and that is applied to the first end of the reflecting mirror is the same as a moving direction of the first end of the reflecting mirror; and/or controlling to interrupt the current passing through the first electromagnet, so that the first end of the reflecting mirror keeps performing uniform motion under driving of the motor; and/or controlling to conduct the current passing through the first electromagnet, so that the direction of the force that is generated by the third permanent magnet and the first electromagnet and that is applied to the first end of the reflecting mirror is opposite to the moving direction of the first end of the reflecting mirror.

With reference to the second aspect, in some implementations of the second aspect, the controlling to conduct or interrupt a current passing through the first electromagnet further includes: periodically controlling to conduct or interrupt the current passing through the first electromagnet.

With reference to the second aspect, in some implementations of the second aspect, the driving apparatus further includes a second power assisting apparatus. A first end of the second power assisting apparatus includes a sixth permanent magnet, a second end of the second power assisting apparatus includes a second electromagnet, the sixth permanent magnet is fastened to a second end of the reflecting mirror, the second electromagnet is fastened to a second position, and the second position is fixed relative to the motor. The method further includes: controlling to conduct or interrupt a current passing through the second electromagnet.

In this embodiment of this application, the driving apparatus further includes the second power assisting apparatus. The first end of the second power assisting apparatus includes the sixth permanent magnet, the second end of the second power assisting apparatus includes the second electromagnet, the sixth permanent magnet is fastened to the second end of the reflecting mirror, the second electromagnet is fastened to the second position, and the second position is fixed relative to the motor. In this application, further, the current passing through the second electromagnet may be controlled to be conducted or interrupted, to control the second power assisting apparatus to act on the second end of the reflecting mirror for the acceleration motion and/or the deceleration motion. In this way, the requirement on the motor can be reduced. This can further avoid interference caused by the power assisting apparatus like the permanent magnet or the spring to uniform motion of the second end of the reflecting mirror, and improve drive control performance of the power assisting apparatus in a motion process of the reflecting mirror.

With reference to the second aspect, in some implementations of the second aspect, the controlling to conduct or interrupt a current passing through the second electromagnet includes: controlling to conduct the current passing through the second electromagnet, so that a direction of a force that is generated by the sixth permanent magnet and the second electromagnet and that is applied to the second end of the reflecting mirror is the same as a moving direction of the second end of the reflecting mirror; and/or controlling to interrupt the current passing through the second electromagnet, so that the second end of the reflecting mirror keeps performing uniform motion under driving of the motor; and/or controlling to conduct the current passing through the second electromagnet, so that the direction of the force that is generated by the sixth permanent magnet and the second electromagnet and that is applied to the second end of the reflecting mirror is opposite to the moving direction of the second end of the reflecting mirror.

With reference to the second aspect, in some implementations of the second aspect, the controlling to conduct or interrupt a current passing through the second electromagnet further includes: periodically controlling to conduct or interrupt the current passing through the second electromagnet.

According to a third aspect, a driving apparatus of a reflecting mirror is provided, including an input/output interface, a processor, and a memory. The processor is configured to control the input/output interface to receive and send a signal or information, the memory is configured to store a computer program, and the processor is configured to invoke the computer program from the memory and run the computer program, so that the driving apparatus performs the driving method in any one of the second aspect or the possible implementations of the second aspect.

According to a fourth aspect, a radar is provided, including the driving apparatus according to any one of the first aspect or the possible implementations of the first aspect, and/or including the driving apparatus according to the third aspect.

According to a fifth aspect, a terminal is provided, including the driving apparatus according to any one of the first aspect or the possible implementations of the first aspect, and/or including the driving apparatus according to the third aspect.

Further, the terminal may be an intelligent transportation device (a vehicle or an uncrewed aerial vehicle), a smart home device, an intelligent manufacturing device, a surveying and mapping device, a robot, or the like. The intelligent transportation device may be, for example, an automated guided vehicle (automated guided vehicle, AGV) or an uncrewed transportation vehicle.

According to a sixth aspect, a computer-readable storage medium is provided. The computer-readable storage medium includes instructions, and the instructions are used to implement the driving method according to any one of the second aspect and the possible implementations of the second aspect.

According to a seventh aspect, a computer program product is provided, including a computer program. When the computer program is run, the computer is enabled to perform the driving method according to any one of the second aspect or the possible implementations of the second aspect.

According to an eighth aspect, a computing device is provided, including at least one processor and a memory. The at least one processor is coupled to the memory, and is configured to read and execute instructions in the memory, to perform the driving method according to any one of the second aspect or the possible implementations of the second aspect.

According to a ninth aspect, a chip is provided. The chip includes a processor and a data interface, and the processor reads, through the data interface, instructions stored in a memory, to perform the driving method according to any one of the second aspect or the possible implementations of the second aspect.

Optionally, in an implementation, the chip may further include the memory. The memory stores the instructions. The processor is configured to execute the instructions stored in the memory. When the instructions are executed, the processor is configured to perform the driving method according to any one of the second aspect or the possible implementations of the second aspect.

According to a tenth aspect, a chip system is provided. The chip system includes at least one processor, configured to support implementation of functions in the second aspect or some implementations of the second aspect, for example, receiving or processing data and/or information in the foregoing method.

In a possible design, the chip system further includes a memory. The memory is configured to store program instructions and data. The memory is located inside the processor or outside the processor. The chip system may include a chip, or may include a chip and another discrete component.

## BRIEF DESCRIPTION OF DRAWINGS

FIG. 1 is a diagram of an example of reciprocating motion of a reflecting mirror according to an embodiment of this application;

FIG. 2 is a diagram of an example of a curve of a moving speed and time of a reflecting mirror according to an embodiment of this application;

FIG. 3 is a diagram of an example of a driving apparatus of a reflecting mirror according to an embodiment of this application;

FIG. 4 is a diagram of an example of a first power assisting apparatus according to an embodiment of this application;

FIG. 5 is a diagram of another example of a first power assisting apparatus according to an embodiment of this application;

FIG. 6 is a diagram of still another example of a first power assisting apparatus according to an embodiment of this application;

FIG. 7 is a diagram of an example of a driving apparatus of another reflecting mirror according to an embodiment of this application;

FIG. 8 is a diagram of an example of a second power assisting apparatus according to an embodiment of this application;

FIG. 9 is a diagram of another example of a second power assisting apparatus according to an embodiment of this application;

FIG. 10 is a diagram of still another example of a second power assisting apparatus according to an embodiment of this application;

FIG. 11 is a diagram of an example of a driving apparatus 1100 according to an embodiment of this application;

FIG. 12 is a diagram of an example of a driving apparatus 1200 according to an embodiment of this application;

FIG. 13 is a diagram of an example of control logic of an electromagnet according to an embodiment of this application;

FIG. 14 is a diagram of an example of time sequence control of an electromagnet according to an embodiment of this application;

FIG. 15 is a diagram of an example of a driving method of a reflecting mirror according to an embodiment of this application; and

FIG. 16 is a block diagram of an example of a hardware structure of a driving apparatus of a reflecting mirror according to an embodiment of this application.

## DESCRIPTION OF EMBODIMENTS

The following describes technical solutions of embodiments in this application with reference to accompanying drawings.

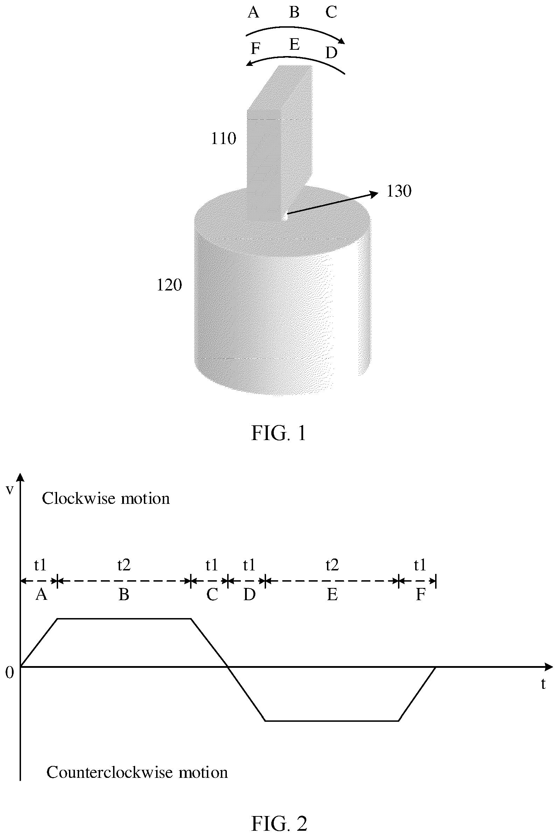

FIG. 1 is a diagram of an example of reciprocating motion of a reflecting mirror according to an embodiment of this application. As shown in FIG. 1, a reflecting mirror 110 is connected to a motor 120 through a rotating shaft 130, so that the motor 120 can drive, through the rotating shaft 130, the reflecting mirror 110 to perform reciprocating motion.

Optionally, the reciprocating motion of the reflecting mirror may be applied to the field of lidars (light detection and ranging, Lidars). The reflecting mirror performs the reciprocating motion within a specific field of view (field of view, FOV), so that scanning coverage of a laser beam in space can be implemented. It should be understood that, when the reciprocating motion of the reflecting mirror is applied to the field of lidars, in a motion periodicity in which the laser reflecting mirror performs the reciprocating motion, moving speeds at two ends of the reflecting mirror need to experience a state A to a state F. In the state A, the reflecting mirror performs clockwise motion, the moving speed gradually increases from 0 to a target speed, and acceleration time is t1. In the state B, the reflecting mirror performs clockwise motion, and keeps performing uniform motion at the target speed, and uniform motion time is t2. In the state C, the reflecting mirror performs clockwise motion, the moving speed gradually decreases from the target speed to 0, and deceleration time is t1. In the state D, the reflecting mirror performs counterclockwise motion, the moving speed gradually increases from 0 to the target speed, and acceleration time is t1. In the state E, the reflecting mirror performs counterclockwise motion, and keeps performing uniform motion at the target speed, and uniform motion time is t2. In the state F, the reflecting mirror performs counterclockwise motion, the moving speed gradually decreases from the target speed to 0, and deceleration time is t1. Refer to a diagram of an example of a curve of a moving speed and time of the reflecting mirror shown in FIG. 2.

It should be further understood that, generally, longer time for the laser reflecting mirror to perform the uniform motion indicates higher corresponding lighting efficiency, a larger FOV angle that can be implemented, and better scanning and coverage effect of the laser beam. The lighting efficiency satisfies the following formula:

$$\eta = \frac{t2}{2t1 + t2} \times 100\%$$

Herein, $\eta$ is the lighting efficiency, t1 is time for performing acceleration motion or deceleration motion each time, and t2 is time for performing uniform motion each time.

Therefore, to ensure the lighting efficiency of the laser reflecting mirror, completion time of the acceleration motion or the deceleration motion in the reciprocating motion of the laser reflecting mirror should be reduced as much as possible, which imposes a higher requirement on a driving component like a motor.

Based on this, this application proposes a driving apparatus of a reflecting mirror. When a motor is used to drive the reflecting mirror to perform reciprocating motion, a power assisting apparatus is combined to assist in acceleration motion or deceleration motion in the reciprocating motion of the reflecting mirror, so that completion time of the acceleration motion or the deceleration motion in the reciprocating motion of the reflecting mirror can be reduced. In this way, a requirement on the motor is reduced.

It should be understood that the solutions of this application may be applied to a lidar, or may be applied to another scenario in which the motor drives a load for acceleration oscillation or deceleration oscillation. This is not limited.

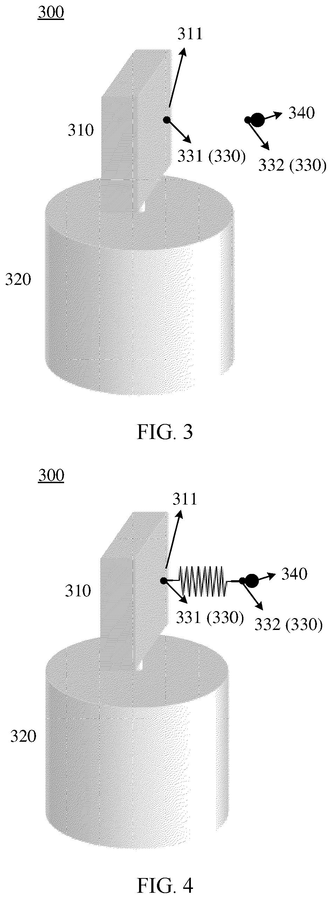

FIG. 3 shows a driving apparatus of a reflecting mirror according to an embodiment of this application. As shown in FIG. 3, a driving apparatus 300 of a reflecting mirror 310 includes a motor 320 and a first power assisting apparatus 330.

The motor 320 is configured to drive the reflecting mirror 310 to move.

Optionally, the motor 320 may be alternatively replaced with another component having a driving function. This is not limited in this application. However, for ease of description, in this application, the motor is used as an example.

In this application, driving the reflecting mirror 310 to move includes driving the reflecting mirror 310 to perform reciprocating motion. Optionally, the reflecting mirror 310 performing the reciprocating motion may also be referred to as an oscillating mirror. This is not limited in this application. It should be understood that, in a process of performing the reciprocating motion, uniform motion, acceleration motion, and deceleration motion are involved.

A first end 331 of the first power assisting apparatus 330 is fastened to a first end 311 of the reflecting mirror 310, a second end 332 of the first power assisting apparatus 330 is fastened to a first position 340, the first position 340 is fixed relative to the motor 320, and the first power assisting apparatus 330 acts on the first end 311 of the reflecting mirror 310 for the acceleration motion and/or the deceleration motion.

It should be understood that the first end 311 of the reflecting mirror 310 is mainly one of two ends that are of the reflecting mirror 310 and that perform the reciprocating motion.

It should be understood that, for the reflecting mirror 310, one surface used to reflect a light beam is referred to as a front surface or a reflective surface, and the other surface is referred to as a back surface. Optionally, the first end 331 of the first power assisting apparatus 330 may be fastened to a back surface of the first end 311 of the reflecting mirror 310.

Optionally, the first position 340 may be located on a housing of the motor 320, or may be another position fixed relative to the motor 320, provided that the first power assisting apparatus 330 fastened to this position can assist the first end 311 of the reflecting mirror 310 in the acceleration motion and/or the deceleration motion.

It should be understood that, in this application, that the first power assisting apparatus 330 acts on the first end 311 of the reflecting mirror 310 for the acceleration motion and/or the deceleration motion mainly means that the first power assisting apparatus 330 can assist the first end 311 of the reflecting mirror 310 in performing the acceleration motion and/or the deceleration motion. In other words, the first power assisting apparatus 330 can assist the first end 311 of the reflecting mirror 310 while the motor 320 drives the first end 311 of the reflecting mirror 310 to perform the acceleration motion and/or the deceleration motion.

In addition to the motor 320, the driving apparatus 300 of the reflecting mirror 310 provided in embodiments of this application further includes the first power assisting apparatus 330, and the first power assisting apparatus 330 can act on the first end 311 of the reflecting mirror 310 for the acceleration motion and/or the deceleration motion, to avoid a case in which the acceleration motion and/or the deceleration motion of the first end 311 of the reflecting mirror 310 are/is driven by only the motor 320. In this way, a requirement on the motor 320 can be reduced.

Optionally, that the first power assisting apparatus 330 acts on the first end 311 of the reflecting mirror 310 for the acceleration motion and/or the deceleration motion may include: When the first end 311 of the reflecting mirror 310 performs the deceleration motion, a direction of a force applied to the first end 311 of the reflecting mirror 310 by the first power assisting apparatus 330 is opposite to a moving direction of the first end 311 of the reflecting mirror 310; and/or when the first end 311 of the reflecting mirror 310 performs the acceleration motion, the direction of the force applied to the first end 311 of the reflecting mirror 310 by the first power assisting apparatus 330 is the same as the moving direction of the first end 311 of the reflecting mirror 310.

In embodiments of this application, when the first end 311 of the reflecting mirror 310 performs the deceleration motion, the direction of the force applied to the first end 311 of the reflecting mirror 310 by the first power assisting apparatus 330 is opposite to the moving direction of the first end 311 of the reflecting mirror 310, so that the first end 311 of the reflecting mirror 310 can be assisted in performing the deceleration motion. When the first end 311 of the reflecting mirror 310 performs the acceleration motion, the direction of the force applied to the first end 311 of the reflecting mirror 310 by the first power assisting apparatus 330 is the same as the moving direction of the first end 311 of the reflecting mirror 310, so that the first end 311 of the reflecting mirror 310 can be assisted in performing the acceleration motion. In this way, the requirement on the motor 320 can be reduced.

Optionally, the first power assisting apparatus 330 may include a first spring, as shown in FIG. 4.

It should be understood that, when the first power assisting apparatus 330 includes the first spring, the first end 311 of the reflecting mirror 310 compresses or stretches the first spring during the reciprocating motion, to generate a pushing force or a pulling force on the first end 311 of the reflecting mirror 310, so as to assist the first end 311 of the reflecting mirror 310 in the acceleration motion and/or the deceleration motion.

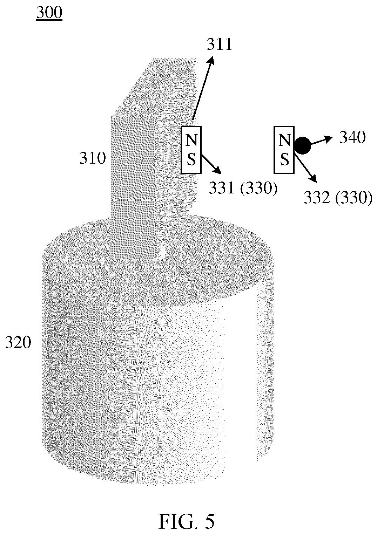

Refer to FIG. 5. Optionally, the first end 331 of the first power assisting apparatus 330 may include a first permanent magnet, and the second end 332 of the first power assisting apparatus 330 may include a second permanent magnet.

Refer to FIG. 5. An upper side of the first permanent magnet is an N pole, and a lower side is an S pole. An upper side of the second permanent magnet is also an N pole, and a lower side is an S pole. Alternatively, an upper side of the first permanent magnet is an S pole, and a lower side is an N pole. An upper side of the second permanent magnet is also an S pole, and a lower side is an N pole. This is not shown in the figure.

It should be understood that, in this application, an acting force generated between the first permanent magnet and the second permanent magnet is a repulsive force, and the repulsive force between the first permanent magnet and the second permanent magnet increases as a distance between the first permanent magnet and the second permanent magnet decreases, and decreases as the distance increases.

In this application, a distance between the first position 340 and the first end 311 of the reflecting mirror 310 may be appropriately controlled to control a magnitude of the repulsive force, so that when the first end 311 of the reflecting mirror 310 performs the acceleration motion or the deceleration motion at a position close to the first position 340, time of the acceleration motion or the deceleration motion is shortened under action of the repulsive force, and when the first end 311 of the reflecting mirror 310 performs the acceleration motion or the deceleration motion at a position far away from the first position 340, the acceleration motion or the deceleration motion is not affected by the first permanent magnet and the second permanent magnet.

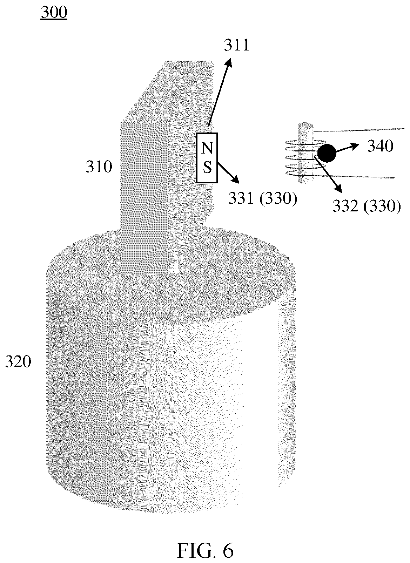

Optionally, the first end 331 of the first power assisting apparatus 330 may include a third permanent magnet, and the second end 332 of the first power assisting apparatus 330 may include a first electromagnet, as shown in FIG. 6.

Optionally, an upper side of the third permanent magnet may be an N pole, and a lower side may be an S pole, or an upper side of the third permanent magnet may be an S pole, and a lower side may be an N pole.

It should be understood that the electromagnet may control a direction of a magnetic field by changing a direction of an electrified current. Therefore, the third permanent magnet and the first electromagnet can be controlled to generate an attractive force or a repulsive force. In this application, when the first end 331 of the first power assisting apparatus 330 includes the third permanent magnet, and the second end 332 of the first power assisting apparatus 330 includes the first electromagnet, the direction of the magnetic field of the electromagnet may be controlled, so that when the first end 311 of the reflecting mirror 310 performs the deceleration motion, the direction of the force applied to the first end 311 of the reflecting mirror 310 by the first power assisting apparatus 330 is opposite to the moving direction of the first end 311 of the reflecting mirror 310, and when the first end 311 of the reflecting mirror 310 performs the acceleration motion, the direction of the force applied to the first end 311 of the reflecting mirror 310 by the first power assisting apparatus 330 is the same as the moving direction of the first end 311 of the reflecting mirror 310.

Optionally, the permanent magnet in this application may be a magnet patch attached to the first end 311 of the reflecting mirror 310 or the first position 340, or may be a magnet block embedded in the first end 311 of the reflecting mirror 310 or the first position 340, or may be fastened to the first end 311 of the reflecting mirror 310 or the first position 340 in another form. This is not limited in this application.

It should be understood that the first power assisting apparatus 330 is merely an example. In practice, the first end 331 and the second end 332 of the first power assisting apparatus 330 each may include an electromagnet or a permanent magnet. This is not limited in this application. However, it is considered that disposing an electromagnet at or embedding a magnet block in the first end 311 of the reflecting mirror 310 increases complexity of a manufacturing process of the first end 311 of the reflecting mirror 310. Therefore, in this application, to simplify the manufacturing process of the first end 311 of the reflecting mirror 310, when the first end 331 of the first power assisting apparatus 330 includes a permanent magnet, a magnet patch is selected, and is attached to the first end 311 of the reflecting mirror 310. When the second end 332 of the first power assisting apparatus 330 includes a permanent magnet, a magnet patch or a magnet block may be selected. This is not limited.

Optionally, the apparatus 300 may further include a controller. The controller may be configured to control to conduct or interrupt a current passing through the first electromagnet, so that the first power assisting apparatus 330 acts on the first end 311 of the reflecting mirror 310 for the acceleration motion and/or the deceleration motion.

It should be understood that, although the first end 311 of the reflecting mirror 310 can be assisted in the acceleration motion and/or the deceleration motion by using only the spring or the permanent magnet, it is easy to interfere with uniform motion of the first end 311 of the reflecting mirror 310 to some extent. In this application, when the first end 331 of the first power assisting apparatus 330 uses a permanent magnet, and the second end 332 of the first power assisting apparatus 330 uses the first electromagnet, the current passing through the first electromagnet may be controlled to be conducted or interrupted, so that the first power assisting apparatus 330 acts on the first end 311 of the reflecting mirror 310 for the acceleration motion and/or the deceleration motion. In this way, the requirement on the motor 320 can be reduced. This can further avoid interference caused by only the power assisting apparatus like the permanent magnet or the spring to the uniform motion of the first end 311 of the reflecting mirror 310, and improve drive control performance of the power assisting apparatus in a motion process of the reflecting mirror 310.

Optionally, the controller may be further configured to: control to conduct the current passing through the first electromagnet, so that a direction of a force that is generated by the third permanent magnet and the first electromagnet and that is applied to the first end 311 of the reflecting mirror 310 is the same as the moving direction of the first end 311 of the reflecting mirror 310; and/or control to interrupt the current passing through the first electromagnet, so that the first end 311 of the reflecting mirror 310 keeps performing uniform motion under driving of the motor 320; and/or control to conduct the current passing through the first electromagnet, so that the direction of the force that is generated by the third permanent magnet and the first electromagnet and that is applied to the first end 311 of the reflecting mirror 310 is opposite to the moving direction of the first end 311 of the reflecting mirror 310.

Specifically, when the first end 311 of the reflecting mirror 310 starts to perform the acceleration motion, the current passing through the first electromagnet may be controlled to be conducted, so that the direction of the force that is generated by the third permanent magnet and the first electromagnet and that is applied to the first end 311 of the reflecting mirror 310 is the same as the moving direction of the first end 311 of the reflecting mirror 310. When the first end 311 of the reflecting mirror 310 starts to perform the uniform motion, the current passing through the first electromagnet is controlled to be interrupted, so that the first end 311 of the reflecting mirror 310 keeps performing the uniform motion under driving of the motor 320. When the first end 311 of the reflecting mirror 310 starts to perform the deceleration motion, the current passing through the first electromagnet is controlled to be conducted, so that the direction of the force that is generated by the third permanent magnet and the first electromagnet and that is applied to the first end 311 of the reflecting mirror 310 is opposite to the moving direction of the first end 311 of the reflecting mirror 310.

Optionally, the controller may be further configured to periodically control the current passing through the first electromagnet to be conducted or interrupted, so that the first power assisting apparatus periodically acts on the first end 311 of the reflecting mirror 310 for the acceleration motion and/or the deceleration motion.

In this embodiment of this application, the current passing through the first electromagnet may be periodically controlled to be conducted or interrupted, so that the first power assisting apparatus 330 periodically acts on the first end 311 of the reflecting mirror 310 for the acceleration motion and/or the deceleration motion. In this way, the requirement on the motor 320 can be reduced. This can further avoid interference caused by the power assisting apparatus like the permanent magnet or the spring to the uniform motion of the first end 311 of the reflecting mirror 310, and improve drive control performance of the power assisting apparatus in reciprocating motion process of the reflecting mirror 310.

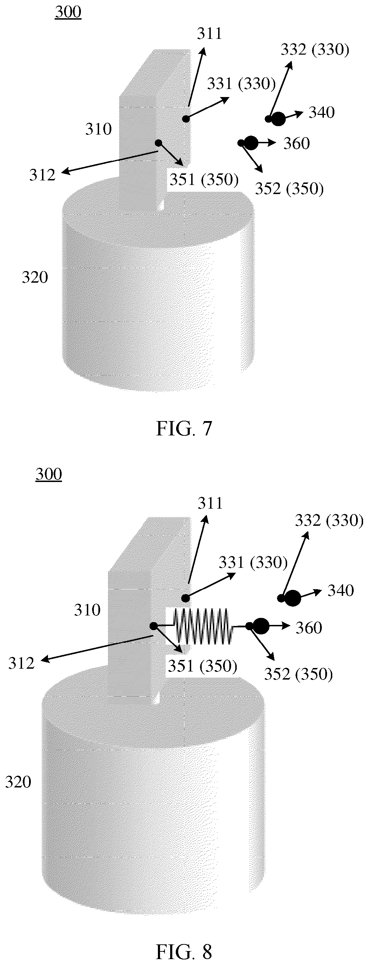

Optionally, the apparatus 300 may further include a second power assisting apparatus 350, as shown in FIG. 7. A first end 351 of the second power assisting apparatus 350 is fastened to a second end 312 of the reflecting mirror 310, a second end 352 of the second power assisting apparatus 350 is fastened to a second position 360, the second position 360 is fixed relative to the motor 320, and the second power assisting apparatus 350 acts on the second end 312 of the reflecting mirror 310 for acceleration motion and/or deceleration motion.

It should be understood that the second end 312 of the reflecting mirror 310 is mainly the other one of the two ends that are of the reflecting mirror 310 and that perform the reciprocating motion.

Similarly, optionally, the first end 351 of the second power assisting apparatus 350 may be fastened to a back surface of the second end 312 of the reflecting mirror 310.

Optionally, the first end 331 of the first power assisting apparatus 330 and the first end 351 of the second power assisting apparatus 350 may be fastened to a same surface of the reflecting mirror 310, for example, are fastened to the front surface or the back surface of the reflecting mirror 310, or may be fastened to different surfaces, for example, one is fastened to the front surface and the other is fastened to the back surface. This is not limited. In an optional solution, in this application, both the first end 331 of the first power assisting apparatus 330 and the first end 351 of the second power assisting apparatus 350 are fastened to the back surface of the reflecting mirror 310.

Optionally, the second position 360 may be located on the housing of the motor 320, or may be another position fixed relative to the motor 320, provided that the second power assisting apparatus fastened to this position can assist the second end 312 of the reflecting mirror 310 in performing the acceleration motion and/or the deceleration motion.

It should be understood that, in this application, that the second power assisting apparatus 350 acts on the second end 312 of the reflecting mirror 310 for the acceleration motion and/or the deceleration motion mainly means that the second power assisting apparatus 350 can assist the second end 312 of the reflecting mirror 310 in performing the acceleration motion and/or the deceleration motion. In other words, the second power assisting apparatus 350 can assist the second end 312 of the reflecting mirror 310 while the motor 320 drives the second end 312 of the reflecting mirror 310 to perform the acceleration motion and/or the deceleration motion.

In addition to the motor 320 and the first power assisting apparatus 330, the driving apparatus 300 of the reflecting mirror 310 provided in this embodiment of this application may further include the second power assisting apparatus 350, and the second power assisting apparatus 350 can act on the second end 312 of the reflecting mirror 310 for the acceleration motion and/or the deceleration motion, to avoid a case in which the acceleration motion and/or the deceleration motion of the second end 312 of the reflecting mirror 310 are/is driven by only the motor 320. In this way, the requirement on the motor 320 can be reduced.

Optionally, that the second power assisting apparatus 350 acts on the second end 312 of the reflecting mirror 310 for the acceleration motion and/or the deceleration motion includes: When the second end 312 of the reflecting mirror 310 performs the deceleration motion, a direction of a force applied to the second end 312 of the reflecting mirror 310 by the second power assisting apparatus 350 is opposite to a moving direction of the second end 312 of the reflecting mirror 310; and/or when the second end 312 of the reflecting mirror 310 performs the acceleration motion, the direction of the force applied to the second end 312 of the reflecting mirror 310 by the second power assisting apparatus 350 is the same as the moving direction of the second end 312 of the reflecting mirror 310.

In this embodiment of this application, when the second end 312 of the reflecting mirror 310 performs the deceleration motion, the direction of the force applied to the second end 312 of the reflecting mirror 310 by the second power assisting apparatus 350 is opposite to the moving direction of the second end 312 of the reflecting mirror 310, so that the second end 312 of the reflecting mirror 310 can be assisted in performing the deceleration motion. When the second end 312 of the reflecting mirror 310 performs the acceleration motion, the direction of the force applied to the second end 312 of the reflecting mirror 310 by the second power assisting apparatus 350 is the same as the moving direction of the second end 312 of the reflecting mirror 310, so that the second end 312 of the reflecting mirror 310 can be assisted in performing the acceleration motion. In this way, the requirement on the motor 320 can be reduced.

Optionally, the second power assisting apparatus 350 includes a second spring, as shown in FIG. 8.

It should be understood that, when the second power assisting apparatus 350 includes the second spring, the second end 312 of the reflecting mirror 310 compresses or stretches the second spring during the reciprocating motion, to generate a pushing force or a pulling force on the second end 312 of the reflecting mirror 310, so as to assist the second end 312 of the reflecting mirror 310 in the acceleration motion and/or the deceleration motion.

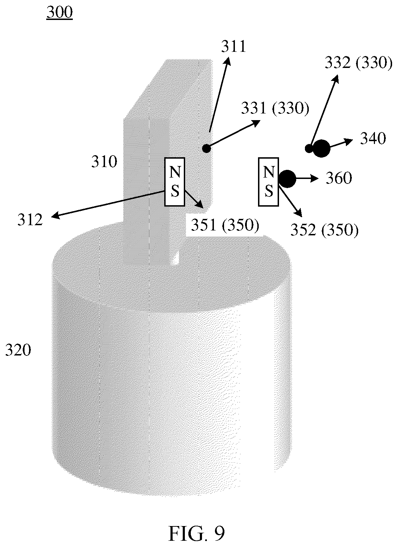

Refer to FIG. 9. Optionally, the first end 351 of the second power assisting apparatus 350 may include a fourth permanent magnet, and the second end 352 of the second power assisting apparatus 350 may include a fifth permanent magnet.

Refer to FIG. 9. An upper side of the fourth permanent magnet is an N pole, and a lower side is an S pole. An upper side of the fifth permanent magnet is also an N pole, and a lower side is an S pole. Alternatively, an upper side of the fourth permanent magnet is an S pole, and a lower side is an N pole. An upper side of the fifth permanent magnet is also an S pole, and a lower side is an N pole. This is not shown in the figure.

It should be understood that, in this application, an acting force generated between the fourth permanent magnet and the fifth permanent magnet is a repulsive force, and the repulsive force between the fourth permanent magnet and the fifth permanent magnet increases as a distance between the fourth permanent magnet and the fifth permanent magnet decreases, and decreases as the distance increases.

In this application, a distance between the second position 360 and the second end 312 of the reflecting mirror 310 may be appropriately controlled to control a magnitude of the repulsive force, so that when the second end 312 of the reflecting mirror 310 performs the acceleration motion or the deceleration motion at a position close to the second position 360, time of the acceleration motion or the deceleration motion is shortened under action of the repulsive force, and when the second end 312 of the reflecting mirror 310 performs the acceleration motion or the deceleration motion at a position far away from the second position 360, the acceleration motion or the deceleration motion is not affected by the fourth permanent magnet and the fifth permanent magnet.

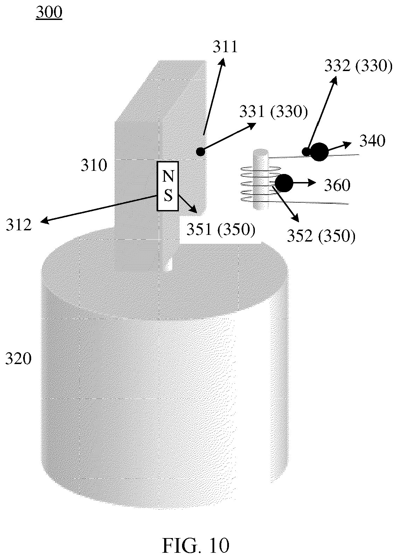

Optionally, the first end 351 of the second power assisting apparatus 350 includes a sixth permanent magnet, and the second end 352 of the second power assisting apparatus 350 includes a second electromagnet, as shown in FIG. 10.

Optionally, an upper side of the sixth permanent magnet may be an N pole, and a lower side may be an S pole, or an upper side of the sixth permanent magnet may be an S pole, and a lower side may be an N pole.

It should be understood that the electromagnet may control a direction of a magnetic field by changing a direction of an electrified current. Therefore, the sixth permanent magnet and the second electromagnet can be controlled to generate an attractive force or a repulsive force. In this application, when the first end 351 of the second power assisting apparatus 350 includes the sixth permanent magnet, and the second end 352 of the second power assisting apparatus 350 includes the second electromagnet, the direction of the magnetic field of the electromagnet may be controlled, so that when the second end 312 of the reflecting mirror 310 performs the deceleration motion, the direction of the force applied to the second end 312 of the reflecting mirror 310 by the second power assisting apparatus 350 is opposite to the moving direction of the second end 312 of the reflecting mirror 310, and when the second end 312 of the reflecting mirror 310 performs the acceleration motion, the direction of the force applied to the second end 312 of the reflecting mirror 310 by the second power assisting apparatus 350 is the same as the moving direction of the second end 312 of the reflecting mirror 310.

Optionally, the permanent magnet in this application may be a magnet patch attached to the second end 312 of the reflecting mirror 310 or the second position 360, or may be a magnet block embedded in the second end 312 of the reflecting mirror 310 or the second position 360, or may be fastened to the second end 312 of the reflecting mirror 310 or the second position 360 in another form. This is not limited in this application.

It should be understood that the second power assisting apparatus 350 is merely an example. In practice, the first end 351 and the second end 352 of the second power assisting apparatus 350 each may include an electromagnet or a permanent magnet. This is not limited in this application. However, it is considered that disposing an electromagnet at or embedding a magnet block in the second end 312 of the reflecting mirror 310 increases complexity of a manufacturing process of the second end 312 of the reflecting mirror 310. Therefore, in this application, to simplify the manufacturing process of the second end 312 of the reflecting mirror 310, when the first end 351 of the second power assisting apparatus 350 includes a permanent magnet, a magnet patch is selected, and is attached to the second end 312 of the reflecting mirror 310. When the second end 352 of the second power assisting apparatus 350 includes a permanent magnet, a magnet patch or a magnet block may be selected. This is not limited.

Optionally, the first power assisting apparatus 330 and the second power assisting apparatus 350 may be the same or different. For example, the first power assisting apparatus 330 and the second power assisting apparatus 350 each may include a spring. Alternatively, the first power assisting apparatus 330 includes a spring, and the first end 351 and the second end 352 of the second power assisting apparatus 350 each include a permanent magnet. Alternatively, the first end 331 and the second end 332 of the first power assisting apparatus 330 respectively include a permanent magnet and an electromagnet, and the first end 351 and the second end 352 of the second power assisting apparatus 350 each include a permanent magnet. This is not limited in this application.

Optionally, the controller may be further configured to control a current passing through the second electromagnet to be conducted or interrupted, so that the second power assisting apparatus 350 acts on the second end 312 of the reflecting mirror 310 for the acceleration motion and/or the deceleration motion.

In this embodiment of this application, the current passing through the second electromagnet may be controlled to be conducted or interrupted, so that the second power assisting apparatus 350 acts on the second end 312 of the reflecting mirror 310 for the acceleration motion and/or the deceleration motion. In this way, the requirement on the motor 320 can be reduced. This can further avoid interference caused by the power assisting apparatus like the permanent magnet or the spring to the uniform motion of the second end 312 of the reflecting mirror 310, and improve drive control performance of the power assisting apparatus in a motion process of the reflecting mirror 310.

Optionally, the controller may be further configured to: control to conduct the current passing through the second electromagnet, so that a direction of a force that is generated by the sixth permanent magnet and the second electromagnet and that is applied to the second end 312 of the reflecting mirror 310 is the same as the moving direction of the second end 312 of the reflecting mirror 310; and/or control to interrupt the current passing through the second electromagnet, so that the second end 312 of the reflecting mirror 310 keeps performing uniform motion under driving of the motor 320; and/or control to conduct the current passing through the second electromagnet, so that the direction of the force that is generated by the sixth permanent magnet and the second electromagnet and that is applied to the second end 312 of the reflecting mirror 310 is opposite to the moving direction of the second end 312 of the reflecting mirror 310.

Specifically, when the second end 312 of the reflecting mirror 310 starts to perform the acceleration motion, the current passing through the second electromagnet may be controlled to be conducted, so that the direction of the force that is generated by the sixth permanent magnet and the second electromagnet and that is applied to the second end 312 of the reflecting mirror 310 is the same as the moving direction of the second end 312 of the reflecting mirror 310. When the second end 312 of the reflecting mirror 310 starts to perform the uniform motion, the current passing through the second electromagnet is controlled to be interrupted, so that the second end 312 of the reflecting mirror 310 keeps performing the uniform motion under driving of the motor 320. When the second end 312 of the reflecting mirror 310 starts to perform the deceleration motion, the current passing through the second electromagnet is controlled to be conducted, so that the direction of the force that is generated by the sixth permanent magnet and the second electromagnet and that is applied to the second end 312 of the reflecting mirror 310 is opposite to the moving direction of the second end 312 of the reflecting mirror 310.

Optionally, the controller may be further configured to periodically control the current passing through the second electromagnet to be conducted or interrupted, so that the second power assisting apparatus 350 periodically acts on the second end 312 of the reflecting mirror 310 for the acceleration motion and/or the deceleration motion.

In this embodiment of this application, the current passing through the second electromagnet may be periodically controlled to be conducted or interrupted, so that the second power assisting apparatus 350 periodically acts on the second end 312 of the reflecting mirror 310 for the acceleration motion and/or the deceleration motion. In this way, the requirement on the motor 320 can be reduced. This can further avoid interference caused by the power assisting apparatus like the permanent magnet or the spring to the uniform motion of the second end 312 of the reflecting mirror 310, and improve drive control performance of the power assisting apparatus in reciprocating motion process of the reflecting mirror 310.

The following describes an optional solution and an assisting process of the driving apparatus by using examples with reference to Embodiment 1 and Embodiment 2.

**Embodiment 1**

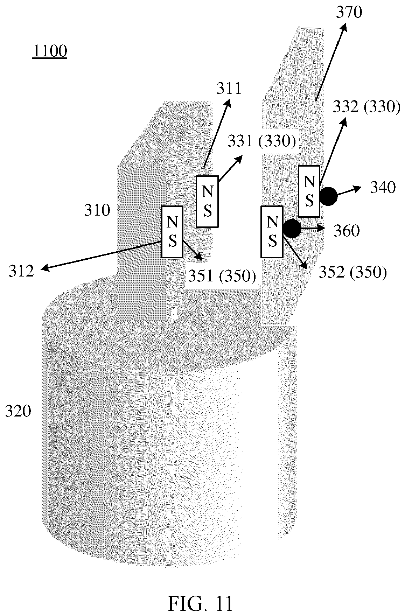

FIG. 11 is a diagram of an example of a driving apparatus 1100 according to an embodiment of this application. As shown in FIG. 11, in this embodiment, the first end 331 and the second end 332 of the first power assisting apparatus 330 and the first end 351 and the second end 352 of the second power assisting apparatus 350 each include the permanent magnet, and both the first position 340 and the second position 360 are located on the housing 370 of the motor 320.

Optionally, the first end 331 of the first power assisting apparatus 330 and the first end 351 of the second power assisting apparatus 350 each include the magnet patch, and the magnet patches are attached to the back surfaces of the first end 311 and the second end 312 of the reflecting mirror 310. It should be understood that the permanent magnet shown in FIG. 11 is merely an example. In an actual operation, an upper side of each permanent magnet may be an S pole, and a lower side is an N pole, or an upper side of the permanent magnet corresponding to the first power assisting apparatus 330 is an S pole and a lower side is an N pole, and an upper side of the permanent magnet corresponding to the second power assisting apparatus 350 is an N pole, and a lower side is an S pole. This is not limited in this application, provided that it can be ensured that a repulsive force is generated between the first end 331 and the second end 332 of the first power assisting apparatus 330, and a force generated between the first end 351 and the second end 352 of the second power assisting apparatus 350 is a repulsive force. For other related descriptions, refer to the foregoing descriptions. Details are not described again.

In the driving apparatus 1100, an assisting process is as follows.

Due to an acting force relationship between magnetic fields, in the reciprocating motion process of the reflecting mirror 310, a repulsive force is applied, during the deceleration motion, to one end that is of the two ends and that is close to the housing 370. In this case, the moving direction is opposite to a direction of the repulsive force. This helps the end complete the deceleration motion. When a speed of the end close to the housing 370 is reduced to 0, when the end starts to perform reverse acceleration motion, the repulsive force is still applied to the end. In this case, the moving direction is consistent with the direction of the repulsive force. This helps the end complete the acceleration motion, until the reflecting mirror starts to perform the uniform motion.

In this embodiment, because the permanent magnet provides an acting force between the reflecting mirror 310 and the housing 370, to help the motor 320 control the acceleration motion or the deceleration motion of the reflecting mirror, a drive current required by the motor 320 to control motion of the oscillating mirror is smaller. In this embodiment, a control capability for the acceleration motion or the deceleration motion of the reflecting mirror 310 can be improved, and a requirement of the reflecting mirror on a driving component and a control algorithm is reduced.

**Embodiment 2**

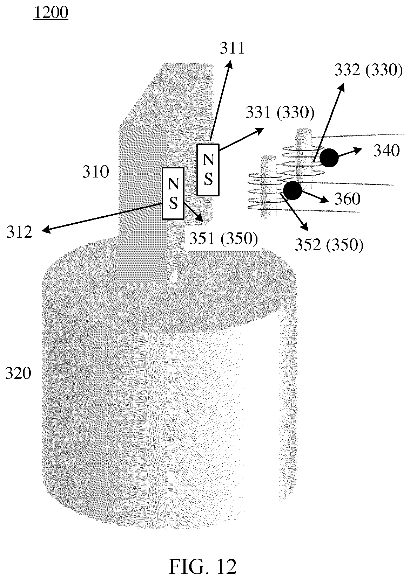

FIG. 12 is a diagram of an example of a driving apparatus 1200 according to an embodiment of this application. As shown in FIG. 12, in this embodiment, the first end 331 of the first power assisting apparatus 330 includes the permanent magnet, and the second end 332 includes the electromagnet. Similarly, the first end 351 of the second power assisting apparatus 350 includes the permanent magnet, and the second end 352 includes the electromagnet.

Optionally, the first end 331 of the first power assisting apparatus 330 and the first end 351 of the second power assisting apparatus 350 each include the magnet patch, and the magnet patches are attached to the back surfaces of the first end 311 and the second end 312 of the reflecting mirror 310. It should be understood that the permanent magnet shown in FIG. 12 is merely an example. In an actual operation, an upper side of the permanent magnet may be an S pole, and a lower side is an N pole, or an upper side of the permanent magnet corresponding to the first power assisting apparatus 330 is an S pole and a lower side is an N pole, and an upper side of the permanent magnet corresponding to the second power assisting apparatus 350 is an N pole, and a lower side is an S pole. This is not limited in this application. For ease of description, in this embodiment, an example in which the upper side of the permanent magnet is the N pole, and the lower side is the S pole is used for description. It should be understood that, in an actual operation, the direction of the magnetic field of the electromagnet may be controlled by using a direction of a coil current, to control the acting force between the electromagnet and the permanent magnet to be an attractive force or a repulsive force. For other related descriptions, refer to the foregoing descriptions. Details are not described again.

It should be understood that, for ease of description, in the following, the electromagnet corresponding to the second end 332 of the first power assisting apparatus 330 is denoted as an electromagnet A, and the electromagnet corresponding to the second end 352 of the second power assisting apparatus 350 is denoted as an electromagnet B.

In the driving apparatus 1200, an assisting process is as follows.

When the reflecting mirror 310 performs clockwise acceleration motion (that is, in the state A), the first end 311 of the reflecting mirror 310 is far away from the electromagnet A, and the second end 312 of the reflecting mirror 310 is close to the electromagnet B. The electromagnet A is controlled to be powered on, so that the upper side is the S pole and the lower side is the N pole, to generate an attractive force on the first end 311 of the reflecting mirror 310, and the electromagnet B is controlled to be powered on, so that the upper side is the N pole and the lower side is the S pole, to generate a repulsive force on the second end 312 of the reflecting mirror 310, to assist the reflecting mirror 310 in performing the clockwise acceleration motion.

When a speed of the reflecting mirror reaches a target speed and the reflecting mirror starts to keep performing uniform motion (that is, in the state B), the electromagnet A and the electromagnet B are controlled to be powered off. In this way, the uniform motion of the reflecting mirror 310 is not affected.

When the reflecting mirror performs clockwise deceleration motion (that is, in the state C), the first end 311 of the reflecting mirror 310 is close to the electromagnet A, and the second end 312 of the reflecting mirror 310 is far away from the electromagnet B. The electromagnet A is controlled to be powered on, so that the upper side is the N pole and the lower side is the S pole, to generate a repulsive force on the first end 311 of the reflecting mirror 310, and the electromagnet B is controlled to be powered on, so that the upper side is the S pole and the lower side is the N pole, to generate an attractive force on the second end 312 of the reflecting mirror 310, to assist the reflecting mirror 310 in performing the clockwise deceleration motion, until the speed of the reflecting mirror decreases to 0 and the reflecting mirror performs reverse motion.

In this embodiment, the electromagnet may be used to control effect of the magnetic field by conducting and interrupting the current passing through the electromagnet. When the reflecting mirror 310 moves to a uniform motion stage, the current passing through the electromagnet is interrupted, and the reflecting mirror 310 performs motion control through driving of the motor 320. When the reflecting mirror 310 moves to an acceleration stage or a deceleration stage, the current passing through the electromagnet is conducted, and a magnetic field acting force is generated between the reflecting mirror 310 and the electromagnet, to assist the reflecting mirror 310 in the acceleration motion or the deceleration motion. In addition, compared with Embodiment 1, this embodiment can avoid interference caused by only the permanent magnet to the uniform motion of the reflecting mirror 310, and can improve drive control performance of the power assisting apparatus in a full motion stage of the reflecting mirror 310.

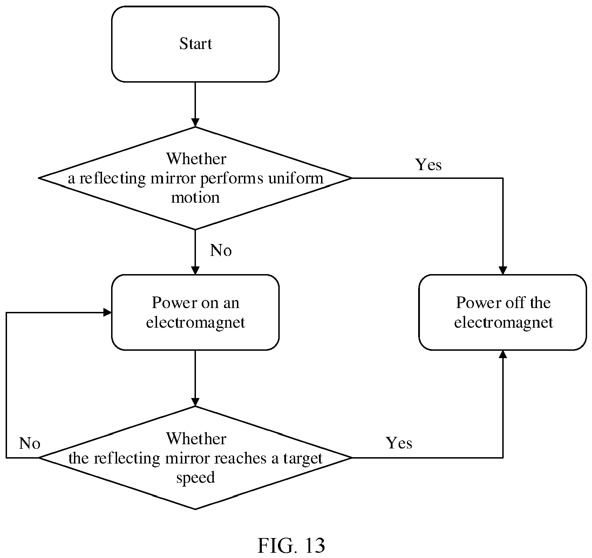

FIG. 13 is a diagram of an example of control logic of an electromagnet according to an embodiment of this application. As shown in FIG. 13, the control logic of the electromagnet is as follows: first, determining whether a reflecting mirror performs uniform motion, and when the reflecting mirror performs the uniform motion, controlling the electromagnet to be powered off; or when the reflecting mirror performs non-uniform motion, powering on the electromagnet, where a direction of an electrified current is mainly determined by a moving direction and a speed of the reflecting mirror, to help the reflecting mirror perform acceleration motion or deceleration motion. In addition, in a process of assisting the reflecting mirror in performing the acceleration motion or the deceleration motion, it needs to be determined in real time whether a target speed is reached. If the target speed is not reached, the electromagnet is kept in a power-on state, and if the target speed is reached, the electromagnet is controlled to be powered off.

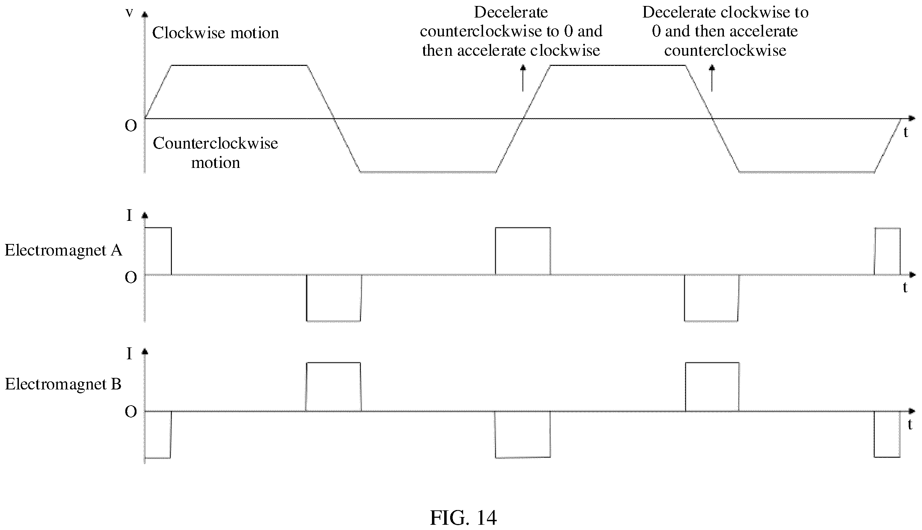

It should be understood that, in an actual operation, powering on and powering off of the electromagnet may be controlled based on a time sequence of the uniform motion, the acceleration motion, and the deceleration motion. The following describes time sequence control of the electromagnet with reference to FIG. 14.

Based on the driving apparatus shown in Embodiment 2, FIG. 14 is a diagram of an example of time sequence control of an electromagnet according to an embodiment of this application. As shown in FIG. 14, when a reflecting mirror performs uniform motion, two electromagnets are powered off. When the reflecting mirror performs non-uniform motion, the two electromagnets are separately powered on to generate magnetic forces, and directions of magnetic fields are opposite, so that the force applied to one end that is of the reflecting mirror and that is close to the electromagnet is a repulsive force and the force applied to one end that is of the reflecting mirror and that is away from the electromagnet is an attractive force, and the reflecting mirror is pushed to complete an acceleration motion stage and a deceleration motion stage.

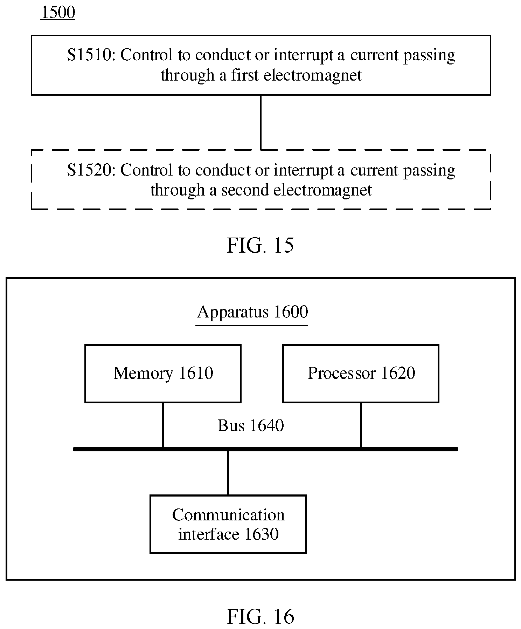

FIG. 15 is a diagram of an example of a driving method of a reflecting mirror according to an embodiment of this application. It should be understood that the method 1500 is applied to a driving apparatus including a motor and a first power assisting apparatus. The motor is configured to drive the reflecting mirror to move. A first end of the first power assisting apparatus includes a third permanent magnet, a second end of the first power assisting apparatus includes a first electromagnet, the third permanent magnet is fastened to a first end of the reflecting mirror, the first electromagnet is fastened to a first position, and the first position is fixed relative to the motor.

The method 1500 includes step S1510: controlling to conduct or interrupt a current passing through the first electromagnet.

It should be understood that, in this application, a purpose of controlling to conduct or interrupt the current passing through the first electromagnet is to enable the first power assisting apparatus to act on the first end of the reflecting mirror for acceleration motion and/or deceleration motion.

The driving method of the reflecting mirror provided in this application may be applied to the driving apparatus including the motor and the first power assisting apparatus. The motor is configured to drive the reflecting mirror to move. The first end of the first power assisting apparatus includes the third permanent magnet, the second end of the first power assisting apparatus includes the first electromagnet, the third permanent magnet is fastened to the first end of the reflecting mirror, the first electromagnet is fastened to the first position, and the first position is fixed relative to the motor. In this application, the current passing through the first electromagnet may be controlled to be conducted or interrupted, so that the first power assisting apparatus acts on the first end of the reflecting mirror for the acceleration motion and/or the deceleration motion. In this way, a requirement on the motor can be reduced. This can further avoid interference caused by the power assisting apparatus like the permanent magnet or a spring to uniform motion of the first end of the reflecting mirror, and improve drive control performance of the power assisting apparatus in a motion process of the reflecting mirror.

Optionally, the controlling to conduct or interrupt a current passing through the first electromagnet may include: controlling to conduct the current passing through the first electromagnet, so that a direction of a force that is generated by the third permanent magnet and the first electromagnet and that is applied to the first end of the reflecting mirror is the same as a moving direction of the first end of the reflecting mirror; and/or controlling to interrupt the current passing through the first electromagnet, so that the first end of the reflecting mirror keeps performing uniform motion under driving of the motor; and/or controlling to conduct the current passing through the first electromagnet, so that the direction of the force that is generated by the third permanent magnet and the first electromagnet and that is applied to the first end of the reflecting mirror is opposite to the moving direction of the first end of the reflecting mirror.

Optionally, the controlling to conduct or interrupt a current passing through the first electromagnet may further include: periodically controlling to conduct or interrupt the current passing through the first electromagnet.

It should be understood that, in this application, a purpose of periodically controlling to conduct or interrupt the current passing through the first electromagnet is to enable the first power assisting apparatus to periodically act on the first end of the reflecting mirror for the acceleration motion and/or the deceleration motion.

Optionally, the driving apparatus may further include a second power assisting apparatus. A first end of the second power assisting apparatus includes a sixth permanent magnet, a second end of the second power assisting apparatus includes a second electromagnet, the sixth permanent magnet is fastened to a second end of the reflecting mirror, the second electromagnet is fastened to a second position, and the second position is fixed relative to the motor. The method 1500 may further include step S 1520: controlling to conduct or interrupt a current passing through the second electromagnet.

It should be understood that, in this application, a purpose of controlling to conduct or interrupt the current passing through the second electromagnet is to enable the second power assisting apparatus to act on the second end of the reflecting mirror for the acceleration motion and/or the deceleration motion.

Optionally, steps S1510 and S 1520 may be performed simultaneously. This is not limited in this application.

In this embodiment of this application, the driving apparatus may further include the second power assisting apparatus. The first end of the second power assisting apparatus includes the sixth permanent magnet, the second end of the second power assisting apparatus includes the second electromagnet, the sixth permanent magnet is fastened to the second end of the reflecting mirror, the second electromagnet is fastened to the second position, and the second position is fixed relative to the motor. In this application, further, the current passing through the second electromagnet may be controlled to be conducted or interrupted, so that the second power assisting apparatus acts on the second end of the reflecting mirror for the acceleration motion and/or the deceleration motion. In this way, the requirement on the motor can be reduced. This can further avoid interference caused by the power assisting apparatus like the permanent magnet or a spring to uniform motion of the second end of the reflecting mirror, and improve drive control performance of the power assisting apparatus in a motion process of the reflecting mirror.

Optionally, the controlling to conduct or interrupt a current passing through the second electromagnet may include: controlling to conduct the current passing through the second electromagnet, so that a direction of a force that is generated by the sixth permanent magnet and the second electromagnet and that is applied to the second end of the reflecting mirror is the same as a moving direction of the second end of the reflecting mirror; and/or controlling to interrupt the current passing through the second electromagnet, so that the second end of the reflecting mirror keeps performing uniform motion under driving of the motor; and/or controlling to conduct the current passing through the second electromagnet, so that the direction of the force that is generated by the sixth permanent magnet and the second electromagnet and that is applied to the second end of the reflecting mirror is opposite to the moving direction of the second end of the reflecting mirror.

Optionally, the controlling to conduct or interrupt a current passing through the second electromagnet may further include: periodically controlling to conduct or interrupt the current passing through the second electromagnet.

It should be understood that, in this application, a purpose of periodically controlling to conduct or interrupt the current passing through the second electromagnet is to enable the second power assisting apparatus to periodically act on the second end of the reflecting mirror for the acceleration motion and/or the deceleration motion.

FIG. 16 is a block diagram of an example of a hardware structure of a driving apparatus of a reflecting mirror according to an embodiment of this application. Optionally, an apparatus 1600 may be specifically a computer device. The apparatus 1600 includes a memory 1610, a processor 1620, a communication interface 1630, and a bus 1640. The memory 1610, the processor 1620, and the communication interface 1630 implement communication connection between each other through the bus 1640.

The memory 1610 may be a read-only memory (read-only memory, ROM), a static storage device, a dynamic storage device, or a random access memory (random access memory, RAM). The memory 1610 may store a program. When the program stored in the memory 1610 is executed by the processor 1620, the processor 1620 is configured to perform the steps of the driving method in embodiments of this application.

The processor 1620 may be a general-purpose CPU, a microprocessor, an ASIC, a graphics processing unit (graphics processing unit, GPU), or one or more integrated circuits, and is configured to execute a related program, to implement the driving method in the method embodiment of this application.

The processor 1620 may alternatively be an integrated circuit chip, and has a signal processing capability. In an implementation process, the driving method in this application may be implemented through an integrated logic circuit of hardware in the processor 1620 or instructions in a form of software.

The processor 1620 may alternatively be a general-purpose processor, a digital signal processor (digital signal processor, DSP), an ASIC, an FPGA or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 1610. The processor 1620 reads information in the memory 1610, and completes, in combination with hardware of the processor 1620, functions that need to be performed by modules included in the apparatus in embodiments of this application, or performs the driving method in the method embodiment of this application.

The communication interface 1630 uses a transceiver apparatus, for example, but not limited to, a transceiver, to implement communication between the apparatus 1600 and another device or a communication network.

The bus 1640 may include a channel on which information is transmitted between the components (for example, the memory 1610, the processor 1620, and the communication interface 1630) of the apparatus 1600.

An embodiment of this application further provides a radar, including the driving apparatus 300, the driving apparatus 1100, or the driving apparatus 1200 in embodiments of this application.

An embodiment of this application further provides a terminal, including the driving apparatus 300, the driving apparatus 1100, or the driving apparatus 1200 in embodiments of this application. Further, the terminal may be an intelligent transportation device (a vehicle or an uncrewed aerial vehicle), a smart home device, an intelligent manufacturing device, a surveying and mapping device, a robot, or the like. The intelligent transportation device may be, for example, an automated guided vehicle (automated guided vehicle, AGV) or an uncrewed transportation vehicle.

An embodiment of this application further provides a computer-readable storage medium, including instructions. The instructions are used to implement the method 1500.

An embodiment of this application further provides a computer program product, including a computer program. When the computer program is run, the computer is enabled to perform the method 1500.

An embodiment of this application further provides a computing device, including at least one processor and a memory. The at least one processor is coupled to the memory, and is configured to read and execute instructions in the memory, to perform the method 1500.

An embodiment of this application further provides a chip, and the chip includes a processor and a data interface. The processor reads, through the data interface, instructions stored in a memory, to perform the method 1500.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A driving apparatus of a reflecting mirror, comprising a motor and a first power assisting apparatus, wherein

   the motor is configured to drive the reflecting mirror to move; and
   a first end of the first power assisting apparatus is fastened to a first end of the reflecting mirror, a second end of the first power assisting apparatus is fastened to a first position, the first position is fixed relative to the motor, and the first power assisting apparatus acts on the first end of the reflecting mirror for acceleration motion and/or deceleration motion.

2. The apparatus according to claim 1, wherein that the first power assisting apparatus acts on the first end of the reflecting mirror for acceleration motion and/or deceleration motion comprises:
   when the first end of the reflecting mirror performs the deceleration motion, a direction of a force applied to the first end of the reflecting mirror by the first power assisting apparatus is opposite to a moving direction of the first end of the reflecting mirror; and/or when the first end of the reflecting mirror performs the acceleration motion, the direction of the force applied to the first end of the reflecting mirror by the first power assisting apparatus is the same as the moving direction of the first end of the reflecting mirror.

3. The apparatus according to claim 1 or 2, wherein the first end of the first power assisting apparatus comprises a first permanent magnet, and the second end of the first power assisting apparatus comprises a second permanent magnet.

4. The apparatus according to claim 1 or 2, wherein the first power assisting apparatus comprises a first spring.

5. The apparatus according to claim 1 or 2, wherein the first end of the first power assisting apparatus comprises a third permanent magnet, and the second end of the first power assisting apparatus comprises a first electromagnet.

6. The apparatus according to claim 5, wherein the apparatus further comprises a controller, and the controller is configured to control to conduct or interrupt a current passing through the first electromagnet.

7. The apparatus according to claim 6, wherein the controller is further configured to:

   control to conduct the current passing through the first electromagnet, so that a direction of a force that is generated by the third permanent magnet and the first electromagnet and that is applied to the first end of the reflecting mirror is the same as the moving direction of the first end of the reflecting mirror; and/or
   control to interrupt the current passing through the first electromagnet, wherein the first end of the reflecting mirror keeps performing uniform motion under driving of the motor; and/or
   control to conduct the current passing through the first electromagnet, so that the direction of the force that is generated by the third permanent magnet and the first electromagnet and that is applied to the first end of the reflecting mirror is opposite to the moving direction of the first end of the reflecting mirror.

8. The apparatus according to claim 6 or 7, wherein the controller is further configured to:
   periodically control to conduct or interrupt the current passing through the first electromagnet.

9. The apparatus according to any one of claims 1 to 8, wherein the apparatus further comprises:
   a second power assisting apparatus, wherein a first end of the second power assisting apparatus is fastened to a second end of the reflecting mirror, a second end of the second power assisting apparatus is fastened to a second position, the second position is fixed relative to the motor, and the second power assisting apparatus acts on the second end of the reflecting mirror for acceleration motion and/or deceleration motion.

10. The apparatus according to claim 9, wherein that the second power assisting apparatus acts on the second end of the reflecting mirror for acceleration motion and/or deceleration motion comprises:
    when the second end of the reflecting mirror performs the deceleration motion, a direction of a force applied to the second end of the reflecting mirror by the second power assisting apparatus is opposite to a moving direction of the second end of the reflecting mirror; and/or when the second end of the reflecting mirror performs the acceleration motion, the direction of the force applied to the second end of the reflecting mirror by the second power assisting apparatus is the same as the moving direction of the second end of the reflecting mirror.

11. The apparatus according to claim 9 or 10, wherein the first end of the second power assisting apparatus comprises a fourth permanent magnet, and the second end of the second power assisting apparatus comprises a fifth permanent magnet.

12. The apparatus according to claim 9 or 10, wherein the second power assisting apparatus comprises a second spring.

13. The apparatus according to claim 9 or 10, wherein the first end of the second power assisting apparatus comprises a sixth permanent magnet, and the second end of the second power assisting apparatus comprises a second electromagnet.

14. The apparatus according to claim 13, wherein the controller is further configured to control to conduct or interrupt a current passing through the second electromagnet.

15. The apparatus according to claim 14, wherein the controller is further configured to:

    control to conduct the current passing through the second electromagnet, so that a direction of a force that is generated by the sixth permanent magnet and the second electromagnet and that is applied to the second end of the reflecting mirror is the same as the moving direction of the second end of the reflecting mirror; and/or control to interrupt the current passing through the second electromagnet, wherein the second end of the reflecting mirror keeps performing uniform motion under driving of the motor; and/or control to conduct the current passing through the second electromagnet, so that the direction of the force that is generated by the sixth permanent magnet and the second electromagnet and that is applied to the second end of the reflecting mirror is opposite to the moving direction of the second end of the reflecting mirror.

16. The apparatus according to claim 14 or 15, wherein the controller is further configured to:
    periodically control to conduct or interrupt the current passing through the second electromagnet.

17. A driving method of a reflecting mirror, wherein the method is applied to a driving apparatus comprising a motor and a first power assisting apparatus, the motor is configured to drive the reflecting mirror to move, a first end of the first power assisting apparatus comprises a third permanent magnet, a second end of the first power assisting apparatus comprises a first electromagnet, the third permanent magnet is fastened to a first end of the reflecting mirror, the first electromagnet is fastened to a first position, and the first position is fixed relative to the motor; and the method comprises:
    controlling to conduct or interrupt a current passing through the first electromagnet.

18. The method according to claim 17, wherein the controlling to conduct or interrupt a current passing through the first electromagnet comprises:

    controlling to conduct the current passing through the first electromagnet, so that a direction of a force that is generated by the third permanent magnet and the first electromagnet and that is applied to the first end of the reflecting mirror is the same as a moving direction of the first end of the reflecting mirror; and/or controlling to interrupt the current passing through the first electromagnet, wherein the first end of the reflecting mirror keeps performing uniform motion under driving of the motor; and/or controlling to conduct the current passing through the first electromagnet, so that the direction of the force that is generated by the third permanent magnet and the first electromagnet and that is applied to the first end of the reflecting mirror is opposite to the moving direction of the first end of the reflecting mirror.

19. The method according to claim 17 or 18, wherein the controlling to conduct or interrupt a current passing through the first electromagnet further comprises: periodically controlling to conduct or interrupt the current passing through the first electromagnet.

20. The method according to any one of claims 17 to 19, wherein the driving apparatus further comprises a second power assisting apparatus, a first end of the second power assisting apparatus comprises a sixth permanent magnet, a second end of the second power assisting apparatus comprises a second electromagnet, the sixth permanent magnet is fastened to a second end of the reflecting mirror, the second electromagnet is fastened to a second position, and the second position is fixed relative to the motor; and the method further comprises:
controlling to conduct or interrupt a current passing through the second electromagnet.

21. The method according to claim 20, wherein the controlling to conduct or interrupt a current passing through the second electromagnet comprises:

controlling to conduct the current passing through the second electromagnet, so that a direction of a force that is generated by the sixth permanent magnet and the second electromagnet and that is applied to the second end of the reflecting mirror is the same as a moving direction of the second end of the reflecting mirror; and/or
controlling to interrupt the current passing through the second electromagnet, wherein the second end of the reflecting mirror keeps performing uniform motion under driving of the motor; and/or
controlling to conduct the current passing through the second electromagnet, so that the direction of the force that is generated by the sixth permanent magnet and the second electromagnet and that is applied to the second end of the reflecting mirror is opposite to the moving direction of the second end of the reflecting mirror.

22. The apparatus according to claim 20 or 21, wherein the controlling to conduct or interrupt a current passing through the second electromagnet further comprises:
periodically controlling to conduct or interrupt the current passing through the second electromagnet.

23. A driving apparatus of a reflecting mirror, comprising an input/output interface, a processor, and a memory, wherein the processor is configured to control the input/output interface to receive and send a signal or information, the memory is configured to store a computer program, and the processor is configured to invoke the computer program from the memory and run the computer program, so that the driving apparatus performs the driving method according to any one of claims 17 to 22.

24. A radar, comprising the driving apparatus according to any one of claims 1 to 16, and/or comprising the driving apparatus according to claim 23.

25. A terminal, comprising the driving apparatus according to any one of claims 1 to 16, and/or comprising the driving apparatus according to claim 23.

26. A chip, wherein the chip comprises a processor and a data interface, and the processor reads, through the data interface, instructions stored in a memory, to perform the driving method according to any one of claims 17 to 22.

27. A computer-readable storage medium, comprising instructions, wherein the instructions are used to implement the driving method according to any one of claims 17 to 22.

28. A computer program product, comprising a computer program, wherein when the computer program is run, a computer is enabled to perform the driving method according to any one of claims 17 to 22.

FIG. 1

FIG. 2

300

311

340

310

331 (330)

332 (330)

320

FIG. 3

300

311

340

310

331 (330)

332 (330)

320

FIG. 4

300

311

310

N
S

331 (330)

N
S

340

332 (330)

320

FIG. 5

300

311

310

N
S

331 (330)

340

332 (330)

320

FIG. 6

300

311

332 (330)

331 (330)

310

340

312

351 (350)

320

360

352 (350)

FIG. 7

300

311

332 (330)

331 (330)

310

340

312

351 (350)

352 (350)

360

320

FIG. 8

300

311

332 (330)

331 (330)

340

310

N
S

N
S

360

312

351 (350)

352 (350)

320

FIG. 9

300

FIG. 10

FIG. 11

1200

311

332 (330)

331 (330)

310

N
S

340

N
S

360

312

351 (350)

352 (350)

320

FIG. 12

FIG. 13

FIG. 14

1500

S1510: Control to conduct or interrupt a current passing through a first electromagnet

S1520: Control to conduct or interrupt a current passing through a second electromagnet

FIG. 15

Apparatus 1600

| Memory 1610 | Processor 1620 |

Bus 1640

Communication interface 1630

FIG. 16

## INTERNATIONAL SEARCH REPORT

| International application No. |
| --- |
| **PCT/CN2022/070794** |

**A.    CLASSIFICATION OF SUBJECT MATTER**

G01S 7/481(2006.01)i;  H04N 3/08(2006.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, IEEE, CNKI: 雷达, 反射镜, 加速, 减速, 转, 弹簧, 助力, 电机, 马达, 磁铁, 磁体, 线圈, 电流, radar, reflecting mirror, accelerate, decelerate, rotate, spring, servounit, electromotor, motor, magnet, coil, current

**C.    DOCUMENTS CONSIDERED TO BE RELEVANT**

| Category* | Citation of document, with indication, where appropriate, of the relevant passages | Relevant to claim No. |
| --- | --- | --- |
| X | JP H0792256 A (MITSUBISHI ELECTRIC CORP.) 07 April 1995 (1995-04-07) description, paragraphs [0013]-[0018], and figures 1-2 | 1, 2, 4 |
| Y | JP H0792256 A (MITSUBISHI ELECTRIC CORP.) 07 April 1995 (1995-04-07) description, paragraphs [0013]-[0018], and figures 1-2 | 3, 5-28 |
| Y | CN 101909186 A (SEIKO EPSON CORP.) 08 December 2010 (2010-12-08) description, paragraphs [0061]-[0081], and figures 1-8 | 3, 5-28 |
| X | JP 2004074166 A (HITACHI VIA MECHANICS LTD.) 11 March 2004 (2004-03-11) description, paragraphs [0008]-[0024], and figure 11 | 1, 2, 4 |
| A | CN 110133618 A (SUTENG INNOVATION TECHNOLOGY CO., LTD.) 16 August 2019 (2019-08-16) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 March 2022** | **27 April 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/070794**

| Patent document cited in search report | | | Publication date (day/month/year) | Patent family member(s) | | | Publication date (day/month/year) |
|---|---|---|---|---|---|---|---|
| JP | H0792256 | A | 07 April 1995 | JP | 3127184 | B2 | 22 January 2001 |
| CN | 101909186 | A | 08 December 2010 | WO | 2004091191 | A1 | 21 October 2004 |
| | | | | JP | 2004312347 | A | 04 November 2004 |
| | | | | JP | 2004341210 | A | 02 December 2004 |
| | | | | US | 2005007562 | A1 | 13 January 2005 |
| | | | | TW | 200508658 | A | 01 March 2005 |
| | | | | KR | 20050019717 | A | 03 March 2005 |
| | | | | JP | 3680842 | B2 | 10 August 2005 |
| | | | | TW | I240090 | B | 21 September 2005 |
| | | | | CN | 1698346 | A | 16 November 2005 |
| | | | | JP | 2006085189 | A | 30 March 2006 |
| | | | | US | 2006244925 | A1 | 02 November 2006 |
| | | | | KR | 693665 | B1 | 14 March 2007 |
| | | | | JP | 4088188 | B2 | 21 May 2008 |
| | | | | US | 7393107 | B2 | 01 July 2008 |
| | | | | US | 7419266 | B2 | 02 September 2008 |
| | | | | CN | 101303516 | A | 12 November 2008 |
| | | | | US | 2009033884 | A1 | 05 February 2009 |
| | | | | JP | 4453644 | B2 | 21 April 2010 |
| | | | | CN | 101303516 | B | 09 June 2010 |
| | | | | CN | 1698346 | B | 27 October 2010 |
| | | | | CN | 101909187 | A | 08 December 2010 |
| | | | | US | 8157387 | B2 | 17 April 2012 |
| | | | | CN | 101909187 | B | 27 June 2012 |
| | | | | CN | 101909186 | B | 18 July 2012 |
| JP | 2004074166 | A | 11 March 2004 | None | | | |
| CN | 110133618 | A | 16 August 2019 | None | | | |

Form PCT/ISA/210 (patent family annex) (January 2015)